# EUROPEAN PATENT SPECIFICATION

(11) **EP 3 506 600 B1**
(45) Date of publication and mention of the grant of the patent: **12.01.2022**
(21) Application number: 18157853.5
(22) Date of filing: 21.02.2018
(51) Int. Cl.: H04L 29/08, H04L 12/26

(54) **COMMUNICATION METHOD, NETWORK CLUSTER AND CLIENT DEVICE**
KOMMUNIKATIONSVERFAHREN, NETZWERK-CLUSTER UND CLIENT-VORRICHTUNG
PROCÉDÉ DE COMMUNICATION, GRAPPE DE RÉSEAU ET DISPOSITIF CLIENT

(30) Priority: 27.12.2017 EP 17210691
(43) Date of publication of application: 03.07.2019
(73) Proprietor: Atos Information Technology GmbH, 81739 München (DE)
(72) Inventor: Bierhoff, Thomas, 33106 Paderborn (DE); Dircksen, Alexander, 33102 Paderborn (DE); Benesch, Matthias, 33129 Delbrück (DE)
(74) Representative: IPAZ

(56) References cited:
- US-A1- 2007 294 399
- US-A1- 2008 307 036
- US-A1- 2015 341 447
- US-A1- 2016 261 478

## Description

The present invention relates to a method of communication and software orchestration within a computer network cluster, a network cluster and a client device. Audio- and video-based conferencing as well as desktop sharing and messaging have turned into convenient features of our daily office work, additionally to the previously established methods of email communication and physical meetings. State of the art communication systems comprise remote data centres available for access for all participating client devices. Therefore, huge bandwidths for data transfer between the client devices and the remote data centres are needed to establish proper communication channels. If the available bandwidth for one or more client devices is low, problems with communication channels through remote data centres may arise, as the provided bandwidth is not sufficient for providing theses communication channels. Especially factory workers within huge industrial sites or construction workers at huge construction sites may have to cope with low bandwidths of network connection available within the industrial site or at construction sites, where network connections may only be available by mobile or satellite connection. These problems are even increased in remote and sparsely populated regions of the world. Thereby, connections to other workers and/or connections to computers may be available for factory workers or construction workers.

US patent application 2016 / 0 261 478 A1 discloses a load balancing system which includes a load balancing component which distributes requests to a DIP pool comprised of one or more machines providing services.

US patent application 2015 / 0 341 447 A1 discloses a system in which a provider device provides network services which may be accessed by a consumer device.

US patent application 2008 / 0 307 036 A1 discloses a central service allocation system in which servers advertise services they offer to the system and clients ask for services to consume.

US patent application 2007 / 0 294 399 A1 discloses a network service performance monitoring apparatus, allowing for remote users to access an application server within an enterprise system from a remote user installation.

An assignment for the present invention is to provide a communication method, a network cluster and a client device which allow for a communication omitting the establishment of communication channels through remote data centres and therefore allow for a stable communication despite low bandwidths, especially if one or more participants of the communication are located at an industrial site and/or a construction site.

A solution of this assignment is provided by a method of communication within a first network cluster, a first network cluster and a first client device according to the independent claims of this invention.

A first network cluster comprises a first central entry point, a first service register, a first application adapter for a first application software and a first device interface for a first client device. The first service register is connected to the first central entry point by a first connection. The first application adapter is connected to the first central entry point by a second connection. The first device interface is connected to the first central entry point by a third connection. The first device interface connects a first client device to the first network cluster. In a method of communication within the first network cluster, the following steps are executed:
- A first availability of the first application software is detected via the first application adapter;
- The first availability of the first application software is stored within the first service register, thereby forming contents of the first service register;
- A first heartbeat signal of the first application adapter is detected;
- The first availability of the first application software within the first service register is updated if no first heartbeat signal has been detected for a first pre-defined time span;
- Contents of the first service register are distributed to the first client device via the first device interface;
- A first direct communication channel is established between the first application adapter and the first client device, wherein communication between the first client device and the first application adapter is guided through the first direct communication channel.

The first direct communication channel is not guided through the client interface, the third connection and the first central entry point.

The first network cluster further comprises a network connection interface which is equipped to connect the first network cluster to a second network cluster via a network connection. The second network cluster comprises a second central entry point, a second service register and a third application adapter for a third application software. The second service register is supplied with the third availability of the third application software by the following steps:
- The third availability of the third application software is detected via the third application adapter;
- The third availability of the third application software is stored within the second service register, forming contents of the second service register;
- A third heartbeat signal of the third application adapter is detected;
- The third availability of the third application software is updated within the second service register if no third heartbeat signal has been detected for a fourth pre-defined time span;
- The contents of the second service register are distributed to the first network cluster and stored within the first service register.

A second direct communication channel, which may be a second peer-to-peer connection, may be established between the first client device and the third application adapter by the first client device. The second direct communication channel is not guided through the second central entry point. Communication between the first client device and the third application adapter is guided through the second direct communication channel. Alternatively, the second direct communication channel may be established between a server running the third application software, omitting the third application adapter, and the first client device. Communication between the first client device and the third application software is guided through the second direct communication channel.

The updating of the third availability may be executed using the same steps as for the first and/or second availability. The detection of the third heart-beat signal and the updating of the third availability within the second service register may be omitted.

Alternatively or additionally to storing the third availability of the third application software within the second service register and distributing the contents of the second service register to the first central entry point, the second central entry point may also directly distribute the third availability to the first central entry point upon detection of the third availability. The first central entry point then may store the third availability to the first service register.

Using this method, contents of the first service register comprise information about an availability of a first application software. This first application software may be a software running on a server. A user of the first client device may choose to use features of the first application software running on the server and therefore needs to communicate with the first application software, either via the first application adapter or via the server. In state of the art communication networks, communication between the first client device and the first application software would be guided through the central entry point of the network cluster. By establishing of the first direct communication channel between the first application adapter and the first client device, data exchange between the first application software and the first client device is not guided through the central entry point, but through the first direct communication channel. Therefore, the needed bandwidth for the central entry point may be lower, as the bandwidth of the first central entry point is only used to provide the first service register containing information regarding the availability of the first application software.

Furthermore, as the first availability of the first application software is updated within the first service register if the first heartbeat signal has not been detected for a first pre-defined timespan, the first availability as part of the content of the first service register is only distributed to the first client device if the first application software is available.

The second network cluster may also comprise another network connection interface by which the connection of the first and the second network cluster is established.

By connecting the first network cluster to the second network cluster via the network connection interface, and the distribution of information about the third availability to the first client device via the network communication interface and the first device interface, the first device gains access to this information.

Therefore, the first client device may establish a second direct communication channel between the first client device and the third application software, preferably not guided through the network connection interface.

If no first heartbeat signal is detected, the first application software may no longer be available, as a connection to the first application adapter may be disturbed. To distribute the information that the first application software may no longer be available, the first availability of the first application software is updated within the first service register. This may be performed by deleting the first availability from the first service register or by changing a first application adapter status within the first service register.

If the first application software is no longer available, the first availability may be updated to inactive. If the first application software is available again, the first availability may be updated to active again.

The invention further comprises a system of the first network cluster, the second network cluster and a first client device.

In an embodiment of the invention, the detection of the first heartbeat signal and the updating of the first availability if no first heartbeat signal is detected for a first pre-defined time span may be omitted. Then, the first availability may be only detected upon booting of the server running the first application software and/or the first application adapter.

The distribution of contents of the first service register may be performed by a broadcast of the central entry point distributing the contents of the first service register to the first network cluster. Alternatively and or additionally, the distribution of contents of the first service register may be performed due to a request from the first client device.

In one embodiment, the first network cluster further comprises a second application adapter for a second application software. A second availability of the second application software is detected via the second application adapter, and stored within the first service register. A second heartbeat signal of the second application adapter is detected. The second availability of the second application software is updated within the first service register if no second heartbeat signal has been detected for a second pre-defined time span. The second application software may run on the server also running the first application software or may run on another server

Therefore, the first service register contains information about the second availability of the second application software. As contents of the first service register are distributed to the first client device, a user of the first client device has access to the information, which application software, in this case the first application software and/or the second application software, is available.

Another first communication channel between the first client device and the second application adapter may be established, and data communicated between the first client device and the second application adapter may be guided through the other first communication channel.

The updating of the first service register regarding the second application software may be performed similar to the updating regarding the first application software described above.

In an embodiment of the invention, the detection of the second heartbeat signal and the updating of the second availability if no second heartbeat signal is detected for a second pre-defined time span may be omitted. Then, the second availability may be only detected upon booting of the server running the second application software and/or the second application adapter.

In one embodiment, the method comprises the following additional steps:
- A first client availability of the first client device is detected via the first client interface;
- The first client availability is stored within the first service register;
- A first client heartbeat signal of the first client device is detected;
- The first client availability is updated within the first service register if no first client heartbeat signal has been detected for a third pre-defined timespan.

Using these additional steps, the contents of the first service register further comprise the first client availability. Therefore, other entities within the first network cluster having access to the first service register know about the availability of the first client device.

In an embodiment of the invention, the detection of the first client heartbeat signal and the updating of the first client availability if no first client heartbeat signal is detected for a third pre-defined time span may be omitted. Then, the first client availability may be only detected upon booting of the first client device and/or upon connecting the first client device to the first network cluster, particularly by a wireless connection.

The updating of the first client availability may be performed by changing a first client availability status or by deleting the first client availability, similar to the method described above for the first application software.

In one embodiment, the first direct communication channel is a first peer-to-peer connection established between the first client device and the first application adapter. Application data from the first application software is exchanged between the first application adapter and the first client device via the first peer-to-peer connection. Peer-to-peer connections are established methods for direct communication within computer networks to avoid guiding of huge amounts of network traffic through communication servers. Therefore, peer-to-peer connections may be used as first direct communication channel and as the other first direct communication channel. Alternatively, the first client device may connect to the server running the first application software or to the first application adapter using a first peer-to-peer connection, and optionally to the server running the second application software and/or to the second application adapter using another first peer-to-peer connection. To establish these peer-to-peer connections, the first client device may use the contents of the first service register which contains the availabilities of the first application software and/or the availability of the second application software and therefore the application adapters and/or the servers, to which a first peer-to-peer connection may be established.

In one embodiment, the first application software comprises a driver for a surveillance camera system. Camera images from the surveillance camera system are sent to the first client device via the first direct communication channel and are displayed at a first display of the first client device. As camera images occupy huge bandwidths, sending them through a central communication server like the central entry point clogs the network bandwidth of the first central entry point and therefore leads to lags and improper distributed camera images. By using the first direct communication channel instead, clogging of the network bandwidth of the first central entry point can be circumvented.

In one embodiment, the first application software comprises a driver for a 3D-printer. State information of the 3D-printer is sent to the first client device via the first direct communication channel. The state information may comprise the progress of the 3D-printing job and/or may comprise information about supplies for the 3D-printer to be restocked. It may be possible that the 3D-printer also comprises a camera and therefore camera images showing the progress of the 3D-printing job may also be sent to the first client device.

In one embodiment, first control commands are sent from the first client device to the first application adapter via the first direct communication channel and are forwarded from the first application adapter to the first application software. These control commands may include control commands for a surveillance camera, for example commands to move the surveillance camera to the right and to the left and/or commands to change an imaging angle of the surveillance camera and/or commands to change the zoom of the surveillance camera. The control commands may also comprise control commands for a 3D-printer.

In one embodiment, the first application software comprises a driver for an industrial machine, like a drilling machine, a milling machine or a laser processing machine. First control commands may be sent from the first client device to the industrial machine to control the industrial machine. Furthermore, status information from the industrial machine may be sent to a first client device via the first direct communication channel.

In one embodiment, the first network cluster further comprises a workload monitoring system. The workload monitoring system has read and write access to the first service register. The workload monitoring system monitors a workload of the first application software and updates the first availability within the first service register if the workload of the first application software is above a first pre-defined value and again updates the first availability within the first service register if the workload of the first application software is below the first pre-defined value again. These updates may be similar to the updates described above regarding the updates due to the first heartbeat signal.

The workload monitoring system therefore changes the first service register if the first application software is used by the first client device and/or other client devices in a way that the server on which the first application software is running approaches its computing capacity. The workload monitoring system may also monitor the workload of the second application software if the second application software is available.

In one embodiment, the first network cluster further comprises a network monitoring system which has read and write access to the first service register and which monitors a quality of a network connection between the first network cluster and the second cluster. The network monitoring system updates the third availability within the first service register if the quality of the network connection between the first network cluster and the second network cluster falls below a second predefined value. The network monitoring system updates the third availability within the first service register if the quality of the network connection between the first network cluster and the second network cluster is above the second pre-defined value again.

Therefore, the network quality, by which the second direct communication channel between the first device and the third application adapter may be affected, is used to alter the contents of the first service register if the network quality falls below the second pre-defined value and therefore is not good enough to provide access to the third application software within the second network cluster.

In one embodiment, the first network cluster or the second network cluster comprises a second device interface for a second client device and the method comprises the following additional steps:
- A second client availability of the second client device is detected via the second client interface;
- The second client availability is stored within the first service register or the second service-register;
- A second client heartbeat signal of the second client device is detected;
- The second client availability is updated within the first service register or second service register if no second client heartbeat signal has been detected for a fifth pre-defined timespan;
- A third direct communication channel between the first client device and the second client device is established, particularly by a third peer-to-peer connection.

Therefore, additionally to accessing application software via direct communication channels, the client devices are also equipped to establish the third direct communication channel between themselves and therefore to allow for a direct communication between users of the client devices.

In one embodiment, a telecommunication channel and/or a video channel is established via the third direct communication channel between the first client device and the second client device. Therefore, spoken and/or video communication between users of the first client device and the second client device is available.

These updates may be similar to the updates described above regarding the updates due to the first heartbeat signal.

The first application adapter, the second application adapter and/or the third application adapter may be equipped to establish a connection to more than one application software, thereby providing another availability of another application software.

A first network cluster comprises a first central entry point, a first service register and a first application adapter for a first application software. The first central entry point is equipped to establish a connection to the first service register, the first application adapter and the first client device via a first device interface. The central entry point is equipped to detect a first availability of the first application software and is equipped to store the first availability of the first application software within the first service register, thereby forming contents of the first service register. Furthermore, the first central entry point is equipped to detect a first heartbeat signal of the first application adapter, is equipped to update the first availability of the first application software within the first service register if no first heartbeat signal has been detected for a first pre-defined timespan and is equipped to distribute contents of the first service register to the first client device via the first device interface. Therefore, the first central entry point works as a communication server providing the availability of the first application software to the first client device connected to the first network cluster.

The first application adapter may be equipped to establish a connection to more than one application software, thereby providing another availability of another application software.

A first client device is equipped to connect to a first central entry point of a first network cluster, is equipped to send out a first client heartbeat signal, is equipped to receive contents of a first service register within the first network cluster and/or a second service register within a second network cluster connected to the first network cluster via a network connection interface. The first client device is equipped to establish a direct communication channel to an application adapter and/or a second client device.

In one embodiment, the first client device comprises a filter for the first software application. The use of the first application software may require drivers for the first application software installed on the first client device and/or certain minimum system requirements. If the first client device lacks the drivers necessary and/or the minimum system requirements, the filter prevents the first client device from connecting to the first application software by filtering the contents of the first service register.

The first network cluster may comprise more than two application adapters for more than two application software. The first application software and the second application software may be connected to the first network cluster with the same application adapter, meaning that the first application adapter and the second application adapter are collectively provided. The second network cluster may comprise more than one application adapter for more than one application software. Furthermore, more than two client devices may be connected to the first network cluster and/or the second network cluster. Information regarding availabilities of these additional application software may be obtained by the methods explained for the first availability, the second availability and/or the third availability.

The above-described properties, features and advantages of this invention as well as the way in which they are achieved, will become more clearly and comprehensively understandable in connection with the following descriptions of the exemplary embodiments, which will be explained in more detail in connection with the drawings in which, in schematic representation in each case:
- Fig. 1: shows a first embodiment of a network cluster;
- Fig. 2: shows a flow diagram of a communication method of the first embodiment of the network cluster;
- Fig. 3 and 4: show a second embodiment of the network cluster and a second flow diagram of the second embodiment;
- Figs. 5 and 6: show a third embodiment of the network cluster and a third flow diagram of the third embodiment;
- Fig. 7: shows a first network cluster connected to a second network cluster;
- Fig. 8: shows a fifth flow diagram for a communication between the two network clusters;
- Fig. 9: shows a second embodiment of two connected network clusters;
- Fig. 10: shows a sixth flow diagram for the second embodiment of the two network clusters;
- Figs. 11 and 12: show a fourth embodiment of the network cluster and a fourth flow diagram of the fourth embodiment;
- Fig. 13: shows a third embodiment of two connected network clusters;
- Fig. 14: shows a fourth embodiment of two connected network clusters; and
- Fig. 15: shows an embodiment of two network clusters connected to further network recourses.

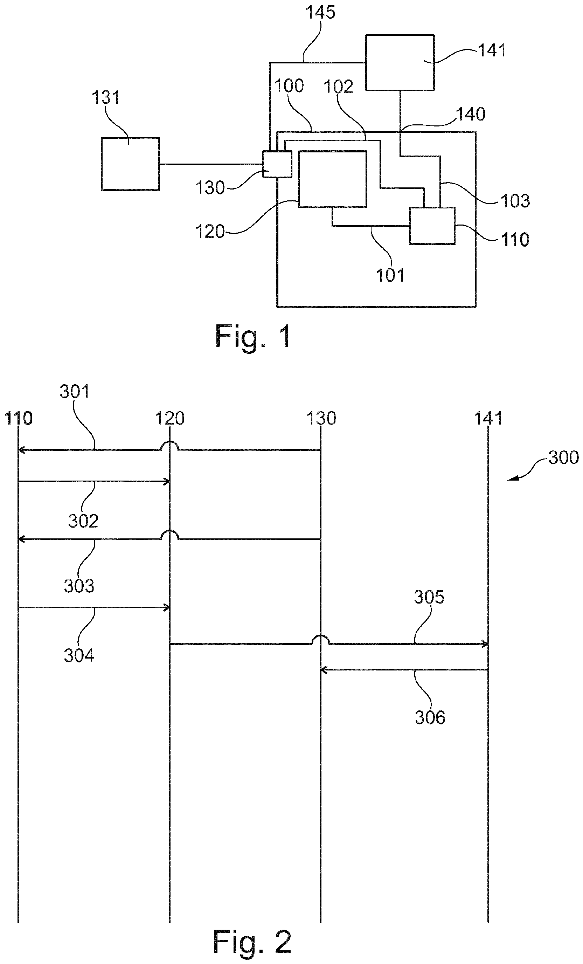

Fig. 1 shows a first network cluster 100 with a central entry point 110, a first service register 120 and a first application adapter 130 for a first application software 131. The first service register 120 is connected to the first central entry point 110 by a first connection 101. The first application adapter 130 is connected to the central entry point 110 with a second connection 102. The first application software 131 may run on a server connected to the first application adapter 130. The first network cluster 100 further comprises a first device interface 140 which is connected to the central entry point 110 via a third connection 103. The first device interface 140 is suitable to connect a first client device 141 to the first network cluster 100. The first client device 141 is equipped to directly communicate with the first application adapter 130 via a first direct communication channel 145. To do so, information, which first application software 131 is available is distributed from the first service register 120 to the first client device 141. Data provided to the first application adapter 130 via the first direct communication channel 145 may be relayed to the first application software 131 by the first application adapter 130.

As the first direct communication channel 145 is established between the first client device 141 and the first application adapter 130, the first application adapter 130 may work as a unifying means to translate communication to or from the first client device 141 to a unified machine language a computer or server the first application software 131 is running on may execute. Therefore, communication interfaces between the application software 131, which may be proprietary, and the client device 141 are harmonized. Hereby, communication protocols and/or data formats may be translated to a vendor neutral form.

Fig. 2 shows a flow diagram 300 of a communication method within the first network cluster 100 of Fig. 1. In a first availability detection step 301 a first availability of the first application software 131 is detected via the first application adapter 130 by the central entry point 110. In a subsequent first storage step 302, the first availability of the first application software 131 is stored within the first service register 120 by the first central entry point 110, thereby forming contents of the first service register 120.

The first application adapter 130 may distribute the availability of the first application software 131 by itself to the first central entry point 110. After loading of the first application software 131 or after booting a device, particularly a server, on which the first application software 131 is running, the first application adapter 130 may send out a broadcast in order to discover the first central entry point 110. If the first application adapter 130 has received no answer from the first central entry point 110 or another first central entry point, the first application adapter 130 waits for incoming broadcasts from a first central entry point. Upon providing the functionality of the first central entry point 110, for instance by booting a server on which a software creating the first entry point 110 is running, the first central entry point 110 broadcasts its availability inside the first network cluster. After sending, the first central entry point 110 switches to a broadcast listening mode. The sent broadcast is received by the waiting application adapter 130 which in turn starts the registration process towards the first central entry point 110. Upon receiving this information, the first central entry point 110 then stores the availability to the first service register 120 in the first storage step 302.

Alternatively, the first central entry point 110 by itself sends out a broadcast to potentially connected application adapters, such as the first application adapter 130, commanding the application adapters to report any availabilities of application software. Upon receiving this command, the first application adapter 130 checks the availability of the first application software 131 and, if the first application software 131 is available, sends the availability to the first central entry point 110 in the first detection step 301. Afterwards, the first availability is again stored to the first service register 120 in the first storage step 302.

After this connection of the first central entry point 110 and the first application adapter 130 is established, and the availability of the first application software 131 is stored to the first service register 120, either by the ways described above, or in a different way, the first application adapter 130 may optionally send out a first heartbeat signal in a first heartbeat step 303 as long as the first application software 131 is available. This first heartbeat signal signals the continuing availability of the first application software 131 to the first central entry point 110. As long as the first heartbeat signal is received by the first central entry point 110, no further action regarding the first service register 120 is taken by the first central entry point 110. If the first central entry point 110 does not detect the first heartbeat signal of the first heartbeat step 303, in an optional first updating step 304 the availability of the first application software 131 is updated within the first service register 120. Should the first application software 131 be available at a later time, the first application adapter 130 would then again send out the first heartbeat signal and thus signalling the first central entry point 110 to update the availability of the first application software 131 within the first service register 120 again.

The first availability of the first application software 131 forms contents of the first service register 120. These contents are distributed to the first client device 141 through the first device interface 140 in a first distribution step 305. Upon receiving the contents of the first service register 120, the availability of the first application software 131 may be displayed at a display or other ways made available at the first client device 141. In a first establishing step 306, the first direct communication channel 145 between the first application adapter 130 and the first client device 141 is established. Communication between the first client device 141 and the first application adapter 130 is guided through the first direct communication channel 145. Communication between the first client device 141 and the first application adapter 130 via the direct communication channel may be adapted (e.g. communication protocol conversion, data formats etc.) and relayed to a computer and/or server running the first application software 131.

If no first heartbeat signal is detected, the first application software 131 may no longer be available, as a connection to the first application adapter 130 may be disturbed. To distribute the information that the first application software 131 may no longer be available, the first availability of the first application software 131 is updated within the first service register 120. This may be performed by deleting the first availability from the first service register 120 or by changing a first application adapter status within the first service register 120.

If the first application software 131 is no longer available, the first availability may be updated to inactive. If the first application software 131 is available again, the first availability may be updated to active again.

The distribution of the contents of the first service register 120 may be performed by event notification and/or on pull request. Alternatively or additionally, a periodic distribution of the contents may take place.

In one embodiment, the first application software 131 comprises a driver for a surveillance camera system. Camera images from the surveillance camera system are sent to the first client device 141 via the first direct communication channel 145 and displayed at a first display of the first client device 141. Therefore, the first client device 141 comprises a display. In another embodiment, the first application software 131 comprises a driver for a 3D-printer. State information of the 3D-printer is sent to the first client device 141 via the first direct communication channel 145. It may be possible that the first client device 141 has the need for drivers to access the first application software 131, for instance the surveillance camera system or a 3D-printer. In both cases, it is possible that upon the distribution of the contents of the first service register 120 to the first client device 141, the first client device 141 only selects available application software if the corresponding driver is installed on the first client device 141.

In one embodiment, first control commands are sent from the first client device 141 to the first application software 131 via the first direct communication channel 145.

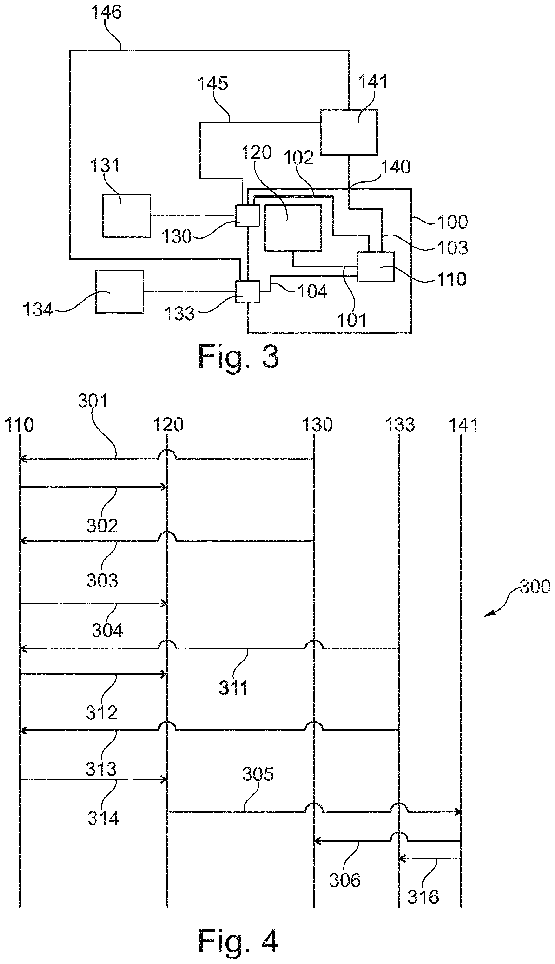

Fig. 3 shows a second embodiment of the first network cluster 100 which is identical to the first network cluster 100 of Fig. 1, as far as no differences are described in the following. The first network cluster 100 further comprises a second application adapter 133 for a second application software 134. The second application adapter 133 is connected to the first central entry point 110 via a fourth connection 104. Another first direct communication channel 146 is established between the first client device 141 and the second application adapter 133. Communication between the first client device 141 and the second application adapter 133 via the other first direct communication channel 146 work as described for the first direct communication channel 145 with regard to Fig. 1.

The second application adapter 133 may again work as a unifying means to translate communication to or from the first client device 141 to a unified machine language a computer or server the second application software 134 is running on may execute.

Fig. 4 shows a flow diagram of a communication method within the first network cluster 100 of Fig. 3. This method comprises the steps 301 to 306 as described for Fig. 2. Additionally, between the steps 304 and 305, the method further comprises a second detection step 311 which is basically similar to the first detection step 301, but lets the first central entry point 110 detect the availability of the second application software 134 via the second application adapter 133. In a second storage step 312, the second availability is stored to the first service register 120. In a second heartbeat step 313, a second heartbeat signal of the second application adapter 133 is sent out and detected by the first central entry point 110. In a second updating step 314, the first central entry point 110 may update the availability of the second application software 134 within the first service register 120 if the second heartbeat signal has not been detected for a second pre-defined timespan.

Contents of the first service register 120 thusly comprise both the first availability of the first application software 131 and the availability of the second application software 134. These contents are distributed to the first client device 141 via the first device interface 140 in the first distribution step 305. Upon receiving this information, the first client device 141 may establish the first direct communication channel 145 to the first application adapter 130 and may also establish the other first direct communication channel 146 to the second application adapter 133 in a second establishing step 316.

Similar to the method of Fig. 2, the second heartbeat step 313 and the second updating step 314 are optional.

The first network cluster 100 of Figs. 1 and 3 may be extended by more application adapters and more application software, leading to additional first direct communication channels between the first client device 141 and these application adapters. The first direct communication channels 145, 146 may be established as first peer-to-peer connections. Application data from the application software 131, 134 may be exchanged with the first client device 141 using these first peer-to-peer connections.

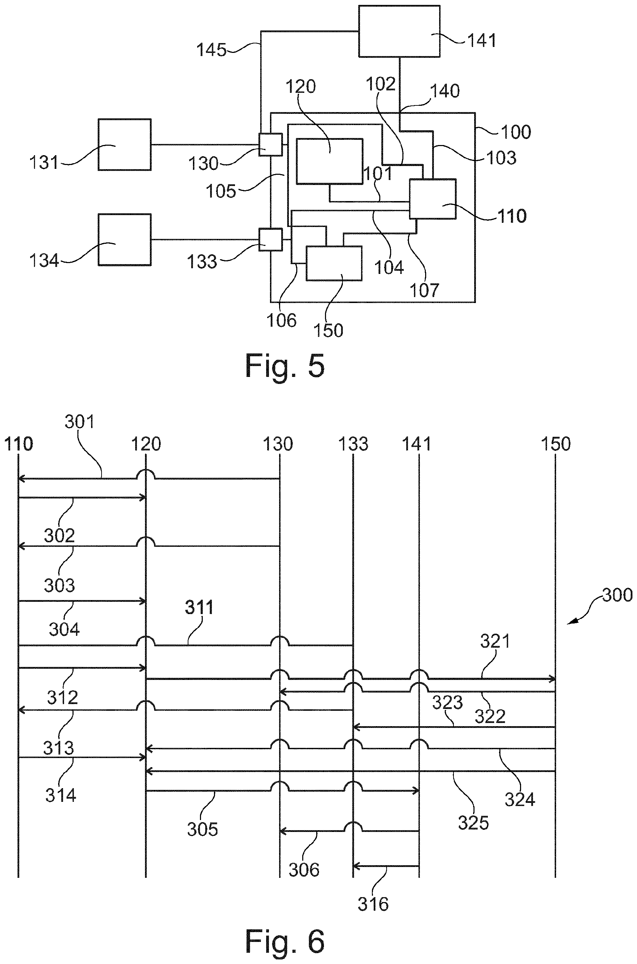

Fig. 5 shows another embodiment of the first network cluster 100 which is similar to the first network cluster 100 of Fig. 3 as far as no differences are described in the following. The first direct communication channel 145 is established between the first application adapter 130 and the first client device 141, but there is no other first direct communication channel between the second application adapter 133 and the first client device 141. Furthermore, the first network cluster 100 comprises a first workload monitoring system 150, which is connected to the first application adapter 130 by a fifth connection 105 and to the second application adapter 133 by a sixth connection 106. The first workload monitoring system 150 is furthermore connected to the first central entry point 110 with a seventh connection 107. The first workload monitoring system 150 has read and write access to the first service register 120 via the seventh connection 107 and the first connection 101 via the first central entry point 110. Alternatively, the seventh connection 107 may also be directly connecting the first workload monitoring system 150 and the first service register 120, omitting the first central entry point 110.

Fig. 6 shows a flow diagram 300 of a communication method within the first network cluster 100 of Fig. 5. In a first workload monitoring step 321, the first workload monitoring system 150 reads the contents of the first service register 120 and thusly is informed about availabilities of the first application software 131 and/or the second application software 134. In a second workload monitoring step 322, a workload of the first application adapter 130 is detected. In a third workload monitoring step 323, which is optional, a workload of the second application software 134 is checked. If the workload of the first application software 131 is above a first pre-defined value, the availability of the first application software 131 is updated within the first service register 120 in a fourth workload monitoring step 324. Within the same step, the availability of the second application software 134 may be updated within the first service register 120 if the workload of the second application software 134 is also above another first pre-defined value. In a fifth workload monitoring step 325, the availabilities of the first application software 131 and optionally of the second application software 134 are updated within the first service register 120 if the workloads of the application software 131, 134 are below the first pre-defined values again. If the first and/or the second application software 131, 134 are heavily hardware-dependent, the first workload monitoring system 150 may be used to update the availabilities of the application software 131, 134 within the first service register 120, and therefore lead to less direct communication channels to the application adapters 130 and 133 .This is especially useful if more than one client device is used within the first network cluster.

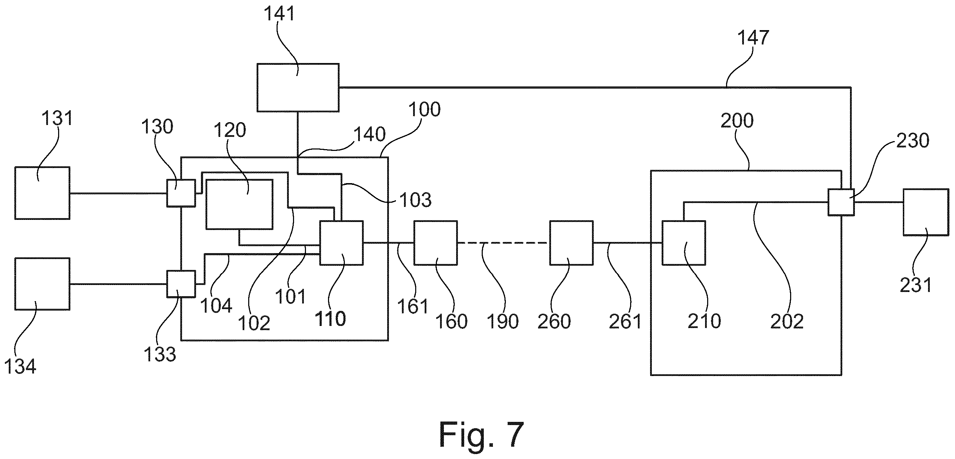

Fig. 7 shows a first network cluster 100 with a first central entry point 110, a first service register 120 and a first application adapter 130, a second application adapter 133 and a first device interface 140 as described above. The first application adapter 130 is connected to the first application software 131. The second application adapter 133 is connected to a second application software 134. The first device interface 140 is connected to the first client device 141. The first network cluster 100 further comprises a first network interface 160 which is connected to the first central entry point 110 by a first network connection 161. A second network cluster 200 comprises a second central entry point 210, a third application adapter 230, which is connected to the second central entry point 210 by another second connection 202, and further comprises a second network interface 260 connected to the second central entry point 210 by a second network connection 261. A third application software 231 is accessible via the third application adapter 230.

Between the third application adapter 230 and the first client device 141, a second direct communication channel 147 has been established.

The first network interface 160 and the second network interface 260 are connected via internet network connection 190, particularly via the internet, via a wireless connection and/or a satellite connection. The network connection 190 may comprise landline-based or cellphone-based or satellite-based internet connectivity.

The third application adapter 230 may again work as a unifying means to translate communication to or from the first client device 141 to a unified machine language a computer or server the third application software 231 is running on may execute.

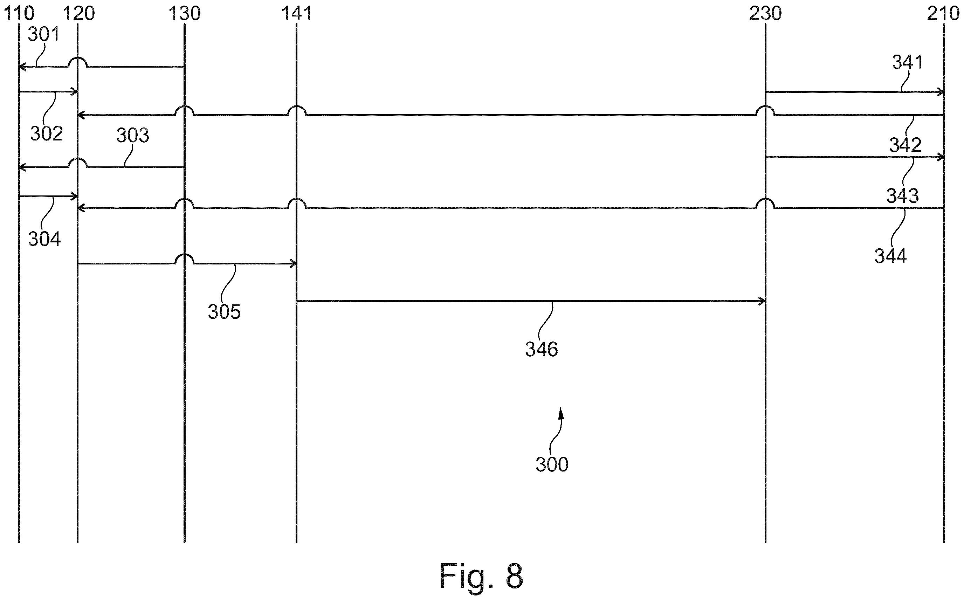

Fig. 8 shows a flow diagram 300 of a communication method within the network clusters 100, 200 of Fig. 7. The method of Fig. 8 comprises the steps 301 to 305 of Fig. 5. Before the distribution step 305 is performed, a third availability of the third application software 231 is detected by the second central entry point 210 via the third application adapter 230 in a third detection step 341. The third availability of the third application software 231 is then stored within the first service register 120 in a third storage step 342. This may be performed by a network communication of the second central entry point 210 directly to the first service register 120 or by a network connection between the second central entry point 210 and the first central entry point 110 which then further relays this information to the first service register 120. In a third heartbeat detection step 343, a third heartbeat signal of the third application software 231 is detected by the second central entry point 210. In a third updating step 344, the third availability of the third application software 231 may be updated within the first service register 120 if the third heartbeat signal has not been detected for a fourth pre-defined timespan. In a third establishing step 346, a second direct communication channel 147 is established between the first client device 141 and the third application adapter 230. Communication between the first client device 141 and the third application adapter 230 is guided through the second direct communication channel 147.

The connection of the first network cluster 100 and the second network cluster 200 may be realized in a way that the central entry points 110, 210 regularly check for availabilities of additional network clusters. The network interfaces 160, 260 may be equipped to establish a communication channel between the network clusters 100, 200. Upon receiving such an availability signal, the central entry points 110, 210 connect. Should more than two network clusters be available, a meshed network structure with communication channels between the network clusters may be available.

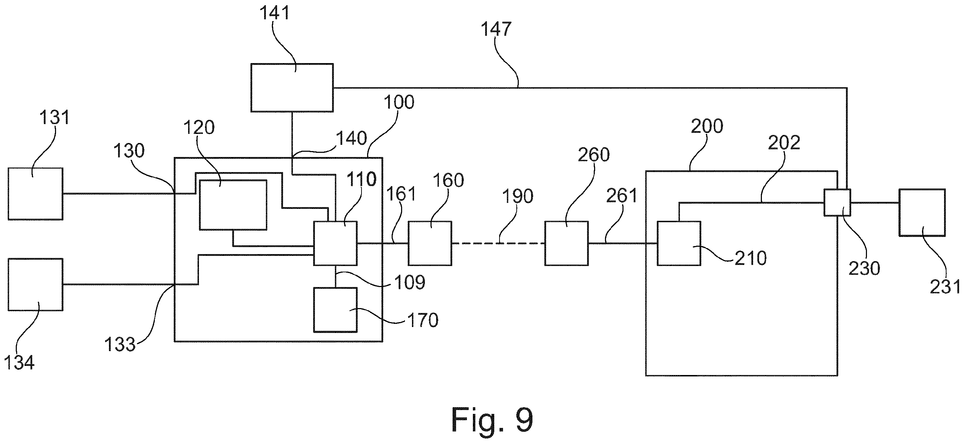

Fig. 9 shows the first network cluster 100 and the second network cluster 200 as described in Fig. 7. The first network cluster 100 further comprises a first network monitoring system 170 which has read and write access to the first service register 120 via an eighth connection 108 to the first central entry point 110 and the first connection 101 to the first service register 120. The first network monitoring system 170 is equipped to monitor a quality of the network connection between the first network cluster 100 and the second network cluster 200 via the first network connection 161, the first network interface 160, the second network interface 260 and the second network connection 261 and the network connection 190 in-between. The first network monitoring system 170 may also monitor a quality of the network connection between the network interfaces 160, 260.

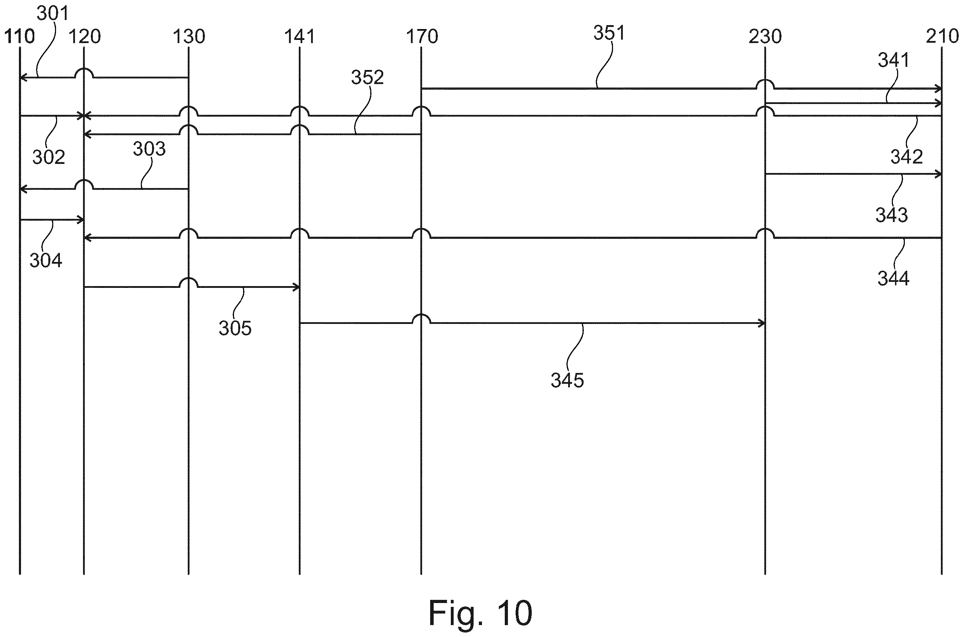

Fig. 10 shows a flow diagram 300 of a communication within the connected network clusters 100, 200 of Fig. 9. In a network monitoring step 351, the first network monitoring system 170 monitors the connection between the first network interface 160 and the second network interface 260. This may be particularly performed by examining the quality of the network connection between the first network monitoring system 170 and the second central entry point 210.

If the quality of the network connection between the first network cluster 100 and the second network cluster 200 falls below a second pre-defined value, the third availability of the third application software 231 is updated within the first service register 120 during a register access step 352. If the quality of the network connection between the first network cluster 100 and the second network cluster 200 is above the second pre-defined value again, the third availability of the third application software 231 is updated within the first service register 120 again, also within the register access step 352, which therefore may be performed multiple times. In a second establishing step 346, the second direct communication channel 147 is again established between the first client device 141 and the third application software 231 similar to Fig. 8.

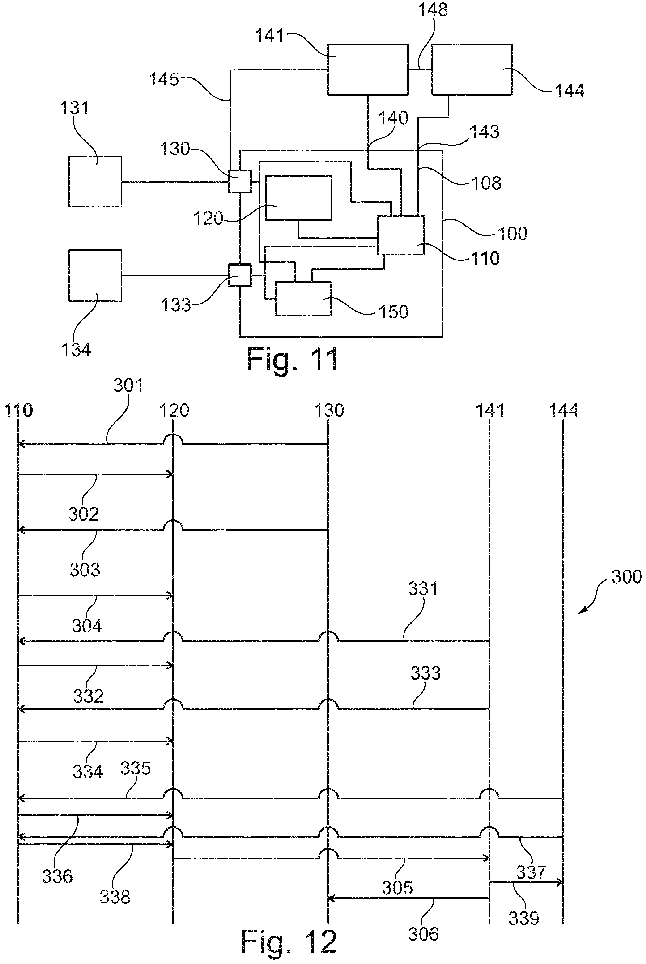

Fig. 11 shows a fourth embodiment of a first network cluster 100, which is similar to the first network cluster 100 of Fig. 5 as far as no differences are described in the following. The first network cluster 100 comprises a second device interface 143 and a second client device 144. A third direct communication channel 148 is established between the first client device 141 and the second client device 144. Fig. 12 shows a flow diagram 300 of setting up the third direct communication channel 148. The method comprises the steps 301 to 304 according to Fig. 2. Additionally, in a first client detection step 331, the first client availability of the first client device 141 is detected via the first device interface 140 by the first central entry point 110. This may be performed using methods similar to the methods described for the first software availability detection step 301. The availability of the first client device 141 is then stored to the first service register 120 within a first client storage step 332. The first client device 141 then sends out a first client heartbeat signal within a first client heartbeat step 333. The first client heartbeat signal is detected by the first central entry point 110 similar to the method described for the first software heartbeat step 303. If the first central entry point 110 does not detect the first client heartbeat signal of the first client heartbeat step 333 for a fourth pre-defined timespan, the availability of the first client device 141 is updated within the first service register 120 in a first client updating step 334. A second client detection step 335 similar to the first client detection step 331, a second client storage step 336 similar to the first client storage step 332 a second client heartbeat step 337 similar to the first client heart-beat step 333 and a second client updating step 338 similar to the first client updating step 334 may be performed for the second client device 144. The first service register 120 thusly comprises the availabilities of the first client device 141 and the second client device 144. If the first client heartbeat signal or the second client heartbeat signal re-emerges at the first central entry point 110 and can be detected again, the availabilities can be updated within the first service register 120 similar to the method of storing the first availability of the first client software 131.

The first client device 141 now receives contents of the first service register 120 which comprises both the availability of the first application software 131 and the second client device 144 within the first distribution step 305. The first client device 141 now may establish a first direct communication channel 145 to the first application adapter 130 within the first establishing step 306 and may also establish a third direct communication channel 148 to the second client device 144 in a client establishing step 339. Application data from the first application software 131 received by the first client device 141 via the first direct communication channel 145 may be directly distributed to the second client device 144 via the third direct communication channel 148.

The first client heartbeat step 333, the first client updating step 334, the second client heartbeat step 337 and the second client updating step 338 are optional and may be omitted.

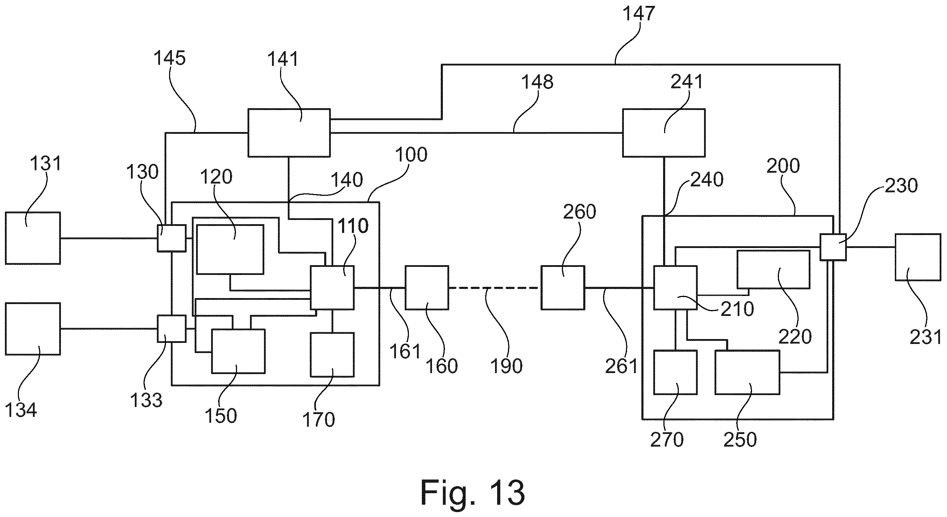

Fig. 13 shows another embodiment of network clusters 100, 200. The first network cluster 100 thereby is similar to the first network cluster of Fig. 11 and further comprises the first network monitoring system 170 of Fig. 9. The second network cluster 200 comprises the second central entry point 210, a second service register 220, a third device interface 240, a second workload monitoring system 250 and a second network monitoring system 270. Additionally, the second network cluster 200 comprises the third application adapter 230 and the second network interface 260 as described above. A third client device 241 is connected to the third device interface 240. The first network cluster by itself works as described above and stores availabilities of the first client device 141, the first application software 131 and the second application software 134 within the first service register, provided that these availabilities are not omitted from the first service register 120 due to workload considerations of the first workload monitoring system 150 as described above. Similarly, within the second network cluster 200 availabilities of the second client device 241 and the third application software 231 are stored within the second service register 220, provided that these availabilities are not omitted from the second service register 220 due to workload considerations of the second workload monitoring system 250 similar to the methods described above regarding the first workload monitoring system 150. The first central entry point 110 and the second central entry point 210 exchange contents of their respective first service register 120 and second service register 220 via the network connection 161, 160, 190, 260, 261, particularly by the communication channel established by the network interfaces 160, 260. Therefore, the first service register 120 also contains the contents of the second service register 220 and vice versa, provided that availabilities are not omitted by network monitors 170, 270. Therefore, the first client device 141 connected to the first network cluster receives both information about the availabilities of the application software 131, 134 of the first network cluster and information about the availability of the third client device 241 and the third application software 231. The first client device 141 has established a first direct communication channel 145 to the first application adapter 130, a second direct communication channel 147 to the third application adapter 230 and a third direct communication channel 148 to the third client device 241. Thereby, the methods described above may be used.

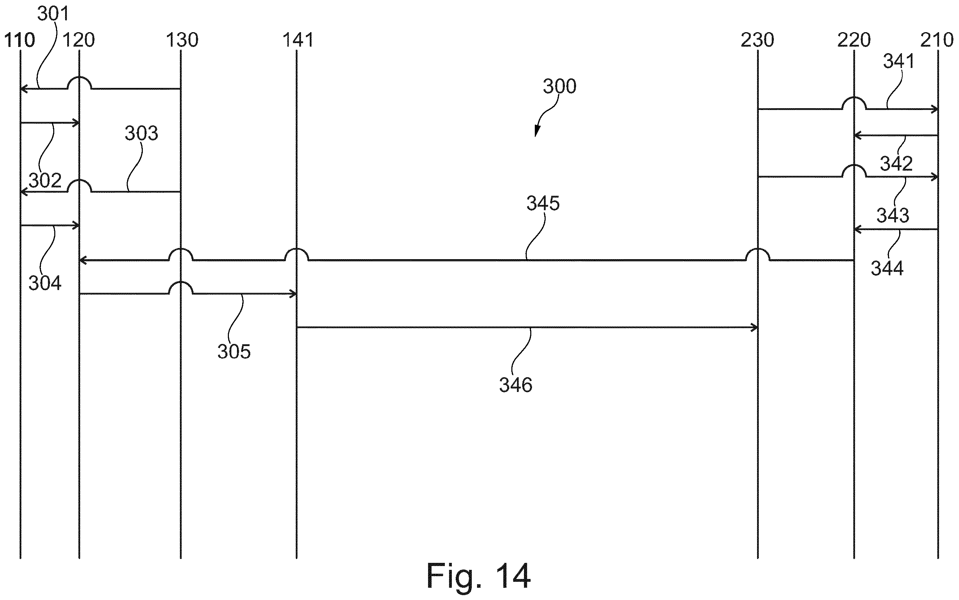

Fig. 14 shows a flow diagram 300 of parts of the communication within the connected network of Fig. 13. In a service register content exchange step 345, the contents of the second service register 220 are distributed to the first service register 120 and therefore subsequently available for the first client device 141 upon the first distribution step 305.

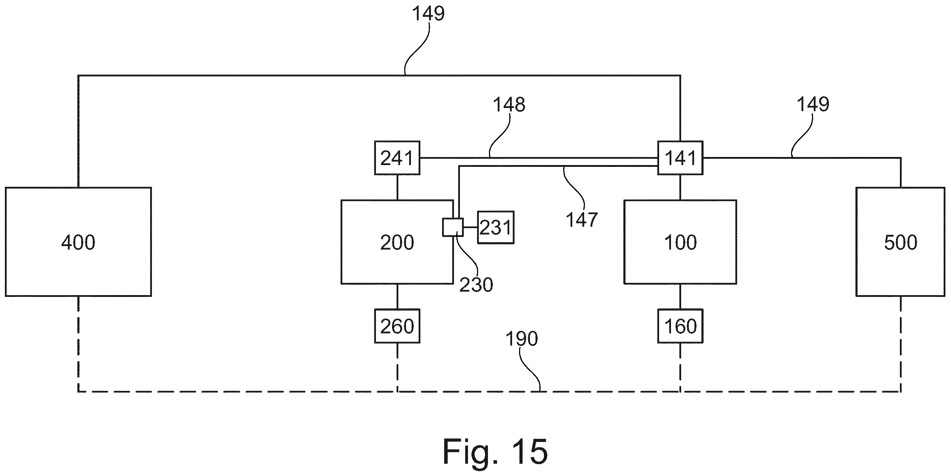

Fig. 15 shows another overview of a network communication system with a first network cluster 100, a second network cluster 200, a first client device 141, a third client device 241 and a third application software 231 connected to the second network cluster via a third application adapter 230. The first network cluster 100 and the second network cluster 200 are connected via the first network interface 160 and the second network interface 260 and via the network connection 190, as described above. Furthermore, the network interfaces are connected to a cloud server farm 400 and a back office facility 500. A user of the first client device 141 has established a second direct communication channel 147 to the third application adapter 230, a third direct communication channel 148 to the third client device 241 and further direct communication channels 149 both to the cloud server farm 400 and the back office facility 500. Therefore, the first client device 141 may be used to contact a user of the second client device 241, thereby using the third application software 231, additionally contacting a user of a computer at the back office facility 500 and accessing data from the cloud server farm 400.

In one embodiment, the direct communication channels 145, 146, 147, 148, 149 are established as peer-to-peer connections.

The central entry points 110, 210 may be equipped to work as a decentralized service middleware, orchestrating the connections of further components within the network clusters 100, 200. Core services like the service registers 120, 220, the workload monitoring systems 150, 250 and the network monitoring systems 170, 270 provide the core technology to allow for connectivity within the network clusters 100, 200 and in between the network clusters 100, 200. Proxy services like the application adapters 130, 133, 230 and the application software 131, 134, 231 provide core functionalities and software programs. Client applications running on the client devices 141, 144, 241 may connect to the application software 131, 134, 231 and use processed data from the software applications 131, 134, 231. The data flow between the client devices 141, 144, 241 may be guided through the software interfaces 130, 133, 230 to allow for compatibility among a huge variety of operating systems running on the client devices 141, 144, 241.

The first application adapter 130 may work as a unifying means to translate communication to or from the client devices 141, 144, to a unified machine language a computer or server the first application software 131 is running on may execute. The second application adapter 133 may work as a unifying means to translate communication to or from the client devices 141, 144, 241 dependent on the operating system of the client devices 141, 144, 241 to a unified machine language a computer or server the second application software 134 is running on may execute. The third application adapter 230 may work as a unifying means to translate communication to or from the client devices 141, 144, 241 dependent on the operating system of the client devices 141, 144, 241 to a unified machine language a computer or server the third application software 231 is running on may execute.

The client devices 141, 144, 241 may comprise computing devices such as PCs, notebooks, tablet PCs, IoT controllers and/or wearable devices like body cameras, smart glasses and further integrated electronics. A client device 141, 144, 241 may consist of a combination of the above mentioned, for instance of a mobile phone with network access and a wireless interface, a smart glass connected to the mobile phone via wireless connection and a body camera connected to the mobile phone via wireless connection. The wireless connections may be Bluetooth or Wi-Fi connections.

The application adapter 130 may be connected to another first application software 131, controlling access to several first application software programs. The same may be established for the second application adapter 133 and/or the third application adapter 230.

Furthermore, more than two network clusters 100, 200 may be connected in the ways described above.

The network clusters 100, 200 may be realized as unified service delivery micro service clusters. The central entry points 110, 210 may be realized as unified delivery services. The service registers 120, 220 may be realized as shared service registers. The application adapters 130, 133, 230 may be realized as unified proxy services. The workload monitoring systems 150, 250 may be realized as machine diagnostics services. The network interfaces 160, 260 may be realized as network bridge services. The network monitoring systems 170, 270 may be realized as network quality services. The invention has been illustrated and described in detail with the preferred exemplary embodiments. The invention is nevertheless not restricted to the examples disclosed. The object of the invention is achieved by the subject-matter of the independent claims. Advantageous embodiments are defined in the dependent claims.

### Reference List

- 100: first network cluster
- 101: first connection
- 102: second connection
- 103: third connection
- 104: fourth connection
- 105: fifth connection
- 106: sixth connection
- 107: seventh connection
- 108: eighth connection
- 110: first central entry point
- 120: first service register
- 130: first application adapter
- 131: first application software
- 133: second application adapter
- 134: second application software
- 140: first device interface
- 141: first client device
- 143: second device interface
- 144: second client device
- 145: first direct communication channel
- 146: another first direct communication channel
- 147: second direct communication channel
- 148: third direct communication channel
- 149: further direct communication channel
- 150: first workload monitoring system
- 160: first network interface
- 161: first network connection
- 190: network connection
- 170: first network monitoring system
- 200: second network cluster
- 202: another second connection
- 210: second central entry point
- 220: second service register
- 230: third application adapter
- 231: third application software
- 240: third device interface
- 241: third client device
- 250: second workload monitoring system
- 260: second network interface
- 261: second network connection
- 270: second network monitoring system
- 300: flow diagram
- 301: first availability detection step
- 302: first storage step
- 303: first heartbeat step
- 304: first updating step
- 305: first distribution step
- 306: first establishing step
- 311: second detection step
- 312: second storage step
- 313: second heartbeat step
- 314: second updating step
- 316: second establishing step
- 321: first workload monitoring step
- 324: fourth workload monitoring step
- 325: fifth workload monitoring step
- 331: first client detection step
- 332: first client storage step
- 333: first client heartbeat step
- 334: first client updating step
- 335: second client detection step
- 336: second client storage step
- 337: second client heartbeat step
- 338: second client updating step
- 339: client establishing step
- 341: third detection step
- 342: third storage step
- 343: third heartbeat detection step
- 344: third updating step
- 345: service register content exchange step
- 346: third establishing step
- 351: network monitoring step
- 352: register access step
- 400: cloud server farm
- 500: back office facility

## Claims

1. A method of communication within a first network cluster (100), wherein the first network cluster (100) comprises a first central entry point (110), a first service register (120), a first application adapter (130) for a first application software (131) and a first device interface (140) for a first client device (141), wherein the first service register (120) is connected to the first central entry point (110) by a first connection (101), wherein the first application adapter (130) is connected to the first central entry point (110) by a second connection (102), wherein the first device interface (140) is connected to the first central entry point (110) by a third connection (103) and wherein the first device interface (140) connects a first client device (141) to the first network cluster (100), comprising the following steps at the first central entry point (110):
- Detection of a first availability of the first application software (131) via the first application adapter (130);
- Storage of information about the first availability of the first application software (131) within the first service register (120), thereby forming contents of the first service register (120);
- Detection whether a first heartbeat signal of the first application adapter (130) is received;
- Updating of the first availability of the first application software (131) within the first service register (120) if no first heartbeat signal has been detected for a first pre-defined time span;
- Distribution of contents of the first service register (120) to the first client device (141) via the first device interface (140);
wherein the first network cluster (100) further comprises a first network connection interface (160), wherein the first network connection interface (160) is equipped to connect the first network cluster (100) to a second network cluster (200) via a network connection (190), wherein the second network cluster (200) comprises a second central entry point (210), a second service register (220), a third application adapter (230) for a third application software (230), wherein the second service register (220) is supplied with a third availability of the third application software (231) by the following steps at the second central entry point (210) :
- Detection of the third availability of the third application software (231) via the third application adapter (230);
- Storage of information about the third availability of the third application software (231) within the second service register (220), thereby forming contents of the second service register (220);
- Detection whether a third heartbeat signal of the third application software (231) is received;
- Updating of the third availability of the third application software (231) within the second service register (220) if no third heartbeat signal has been detected for a fourth pre-defined time span;
- Distribution of contents of the second service register (220) to the first service register (120) via the first network connection interface (160);
**characterized in that**
a first direct communication channel (145) is established between the first application adapter (130) and the first client device (141) by the first client device (141), that communication between the first client device (141) and the first application adapter (130) is guided through the first direct communication channel (145),
**in that** a second direct communication channel (147) is established between the first client device (141) and the third application adapter (230) by the first client device (141), that the second direct communication channel (147) is not guided through the second central entry point (210), and that communication between the first client device (141) and the third application adapter (230) is guided through the second direct communication channel (147),
and **in that** the first direct communication channel (145) is not guided through the client interface (140), the third connection (103) and the first central entry point (110).

2. The method according to claim 1, wherein the second direct communication channel (147) is not guided through the network connection (190).

3. The method according to claims 1 or 2, wherein only the contents of the first service register (120) are distributed to the first client device (141) via the first device interface (140).

4. The method according to any of claims 1 to 3, wherein the first network cluster (100) further comprises a second application adapter (133) for a second application software (134), comprising the following steps:
- Detection of a second availability of the second application software (134) via the second application adapter (133);
- Storage of the second availability of the second application software (134) within the first service register (120);
- Detection of a second heartbeat signal of the second application adapter (133);
- Updating of the second availability of the second application software (134) within the first service register (120) if no second heartbeat signal has been detected for a second pre-defined time span.

5. The method according to any of claims 1 to 4, comprising the additional steps:
- Detection of a first client availability of the first client device (141) via the first client interface;
- Storage of the first client availability within the first service register (120);
- Detection of a first client heartbeat signal of the first client device (141);
- Updating of the first client availability within the first service register (120) if no first client heartbeat signal has been detected for a third pre-defined time span.

6. The method according to any of claims 1 to 5, wherein the first direct communication channel (145) is a first peer-to-peer connection established between the first client device (141) and the first application adapter (130) and wherein application data from the first application software (131) is exchanged between the first application adapter (130) and the first client device (141) via the first peer-to-peer connection.

7. The method according to any of claims 1 to 6, wherein the first application software (131) comprises a driver for a surveillance camera system, and wherein camera images from the surveillance camera system are sent to the first client device (141) via the first direct communication channel (145) and displayed at a first display of the first client device (141).

8. The method according to any of claims 1 to 7, wherein the first application software (131) comprises a driver for a 3D-printer, and wherein state information of the 3D-printer is sent to the first client device (141) via the first direct communication channel (145).

9. The method according to any of claims 1 to 8, wherein first control commands are sent from the first client device (141) to the first application adapter (130) via the first direct communication channel (145).

10. The method according to any of claims 1 to 9, wherein the first network cluster (100) further comprises a first workload monitoring system (150), wherein the first workload monitoring system (150) has read and write access to the first service register (120), wherein the first workload monitoring system (150) monitors a workload of the first application software (131) and wherein the first workload monitoring system (150) updates the first availability within the first service register (120) if the workload of the first application software (131) is above a first pre-defined value and updates the first availability within the first service register (120) if the workload of the first application software (131) is below the first pre-defined value again.

11. The method according to any of claims 1 to 10, wherein the first network cluster (100) further comprises a first network monitoring system (170), wherein the first network monitoring system (170) has read and write access to the first service register (120), wherein the first network monitoring system (170) monitors a quality of a network connection between the first network cluster (100) and the second network cluster (200), and wherein the first network monitoring system (170) updates availabilities of application software interfaces of the second network cluster (200) within the first service register (120) if the quality of the network connection between the first network cluster (100) and the second network cluster (200) falls below a second pre-defined value and updates availabilities of application software interfaces of the second network cluster (200) within the first service register (120) if the quality of the network connection between the first network cluster (100) and the second network cluster (200) is above the second pre-defined value again.

12. The method according to any of claims 1 to 11, wherein the first network cluster (100) or the second network cluster (200) comprises a second device interface (143) and/or a third device interface (240) for a second client device (144) and/or a third client device (241), comprising the following additional steps:
- Detection of a second client availability of the second client device (144) or the third client device (241) via the second client interface (143) or the third device interface (240) ;
- Storage of the second client availability within the first service register (120) or the second service register (220);
- Detection of a second client heartbeat signal of the second client device (144) or the third client device (241);
- Updating of the second client availability within the first or second service register (120, 220) if no second client heartbeat signal has been detected for a fifth pre-defined time span;
- Establishing of a third direct communication channel (148) between the first client device (141) and the second or third client device (144, 241), particularly of a third peer-to-peer connection.

13. The method according to claim 12, wherein a telecommunication channel and/or a video channel is established via the third direct communication channel (148).

14. A system of a first network cluster (100), a second network cluster (200) and a first client device (141), wherein the first network cluster (100) comprises a first central entry point (110), a first service register (120) and a first application adapter (130) for a first application software (131), wherein the first central entry point (110) is equipped to establish a connection to the first service register (120), the first application adapter (130) and a first client device (141) via a first device interface (140), wherein the first service register (120) may be connected to the first central entry point (110) by a first connection (101), wherein the first application adapter (130) may be connected to the first central entry point (110) by a second connection (102), wherein the first device interface (140) may be connected to the first central entry point (110) by a third connection (103), wherein the first central entry point (110) is equipped to detect a first availability of the first application software (131) and is equipped to store the first availability of the first application software (131) within the first service register (120), thereby forming contents of the first service register (120), wherein the first central entry point (110) is equipped to detect a first heartbeat signal of the first application adapter (130), is equipped to update the first availability of the first application software (131) within the first service register (120) if no first heartbeat signal has been detected for a first pre-defined time span and is equipped to distribute contents of the first service register (120) to the first client device (141) via the first device interface (140), wherein the first network cluster (100) further comprises a first network connection interface (160), wherein the first network connection interface (160) is equipped to connect the first network cluster (100) to the second network cluster (200) via a network connection (190) and in that the first network cluster (100) is equipped to receive contents of a second service register (220) via the first network connection interface (160), wherein the second network cluster (200) comprises a second central entry point (210), the second service register (220) and a third application adapter (230) for a third application software (231), wherein the second central entry point (210) is equipped to establish a connection to the second service register (220) and the third application adapter (230), is equipped to detect a third availability of the third application software (231) and is equipped to store the third availability of the third application software (231) within the second service register (220), thereby forming contents of the second service register (220), wherein the second central entry point (210) is equipped to detect a third heartbeat signal of the third application adapter (230), is equipped to update the third availability of the third application software (231) within the second service register (220) if no first heartbeat signal has been detected for a third pre-defined time span and is equipped to distribute contents of the second service register (220) to the first network cluster (100) via the network connection interface (160), wherein the first client device (141) is equipped to connect to a first central entry point (110) of a first network cluster (100), wherein the first client device (141) is equipped to send out a first client heartbeat signal, is equipped to receive contents of a first service register (120) within the first network cluster (100) and/or a second service register within a second network cluster (200) connected to the first network cluster (100) via a first network connection interface (160), and wherein the first client device (141) is equipped to establish a direct communication channel (145, 146, 147, 148, 149) to the first application adapter (130) and the third application adapter (230),
**characterized in that**
a first direct communication channel (145) is established between the first application adapter (130) and the first client device (141) by the first client device (141), that the first direct communication channel (145) is not guided through the first central entry point (110), that communication between the first client device (141) and the first application adapter (130) is guided through the first direct communication channel (145),
**in that** a second direct communication channel (147) is established between the first client device (141) and the third application adapter (230) by the first client device (141), that the second direct communication channel (147) is not guided through the second central entry point (210), and that communication between the first client device (141) and the third application adapter (230) is guided through the second direct communication channel (147).),
and **in that** the first direct communication channel (145) is not guided through the client interface (140), the third connection (103) and the first central entry point (110).

15. The system according to claim 14, wherein the first entry point (110) is equipped to only distribute the contents of the first service register (120) to the first client device (141) via the first device interface (140).

## Patentansprüche

1. Verfahren zur Kommunikation innerhalb eines ersten Netzwerkclusters (100), wobei der erste Netzwerkcluster (100) einen ersten zentralen Eintrittspunkt (110), ein erstes Dienstregister (120), einen ersten Anwendungsadapter (130) für eine erste Anwendungssoftware (131) und eine erste Vorrichtungsschnittstelle (140) für eine erste Client-Vorrichtung (141) umfasst, wobei das erste Dienstregister (120) mit dem ersten zentralen Eintrittspunkt (110) durch eine erste Verbindung (101) verbunden ist, wobei der erste Anwendungsadapter (130) mit dem ersten zentralen Eintrittspunkt (110) durch eine zweite Verbindung (102) verbunden ist, wobei die erste Vorrichtungsschnittstelle (140) mit dem ersten zentralen Eintrittspunkt (110) durch eine dritte Verbindung (103) verbunden ist und wobei die erste Vorrichtungsschnittstelle (140) eine erste Client-Vorrichtung (141) mit dem ersten Netzwerkcluster (100) verbindet, umfassend die folgenden Schritte an dem ersten zentralen Eintrittspunkt (110):
- Erkennung einer ersten Verfügbarkeit der ersten Anwendungssoftware (131) über den ersten Anwendungsadapter (130);
- Speicherung von Informationen über die erste Verfügbarkeit der ersten Anwendungssoftware (131) innerhalb des ersten Dienstregisters (120), wodurch Inhalte des ersten Dienstregisters (120) gebildet werden;
- Erkennung, ob ein erstes Herzschlagsignal des ersten Anwendungsadapters (130) empfangen wird;
- Aktualisieren der ersten Verfügbarkeit der ersten Anwendungssoftware (131) innerhalb des ersten Dienstregisters (120), wenn für eine erste vordefinierte Zeitspanne kein erstes Herzschlagsignal erkannt wurde;
- Verteilung von Inhalten des ersten Dienstregisters (120) an die erste Client-Vorrichtung (141) über die erste Vorrichtungsschnittstelle (140);
wobei der erste Netzwerkcluster (100) ferner eine erste Netzwerkverbindungsschnittstelle (160) umfasst, wobei die erste Netzwerkverbindungsschnittstelle (160) eingerichtet ist, um den ersten Netzwerkcluster (100) über eine Netzwerkverbindung (190) mit einem zweiten Netzwerkcluster (200) zu verbinden, wobei der zweite Netzwerkcluster (200) einen zweiten zentralen Eintrittspunkt (210), ein zweites Dienstregister (220), einen dritten Anwendungsadapter (230) für eine dritte Anwendungssoftware (230) umfasst, wobei dem zweiten Dienstregister (220) eine dritte Verfügbarkeit der dritten Anwendungssoftware (231) durch die folgende Schritte an dem zweiten zentralen Eintrittspunkt (210) zugeführt wird:
- Erkennung der dritten Verfügbarkeit der dritten Anwendungssoftware (231) über den dritten Anwendungsadapter (230);
- Speicherung von Informationen über die dritte Verfügbarkeit der dritten Anwendungssoftware (231) innerhalb des zweiten Dienstregisters (220), wodurch Inhalte des zweiten Dienstregisters (220) gebildet werden;
- Erkennung, ob ein drittes Herzschlagsignal der dritten Anwendungssoftware (231) empfangen wird;
- Aktualisieren der dritten Verfügbarkeit der dritten Anwendungssoftware (231) innerhalb des zweiten Dienstregisters (220), wenn für eine vierte vordefinierte Zeitspanne kein drittes Herzschlagsignal erkannt wurde;
- Verteilung von Inhalten des zweiten Dienstregisters (220) an das erste Dienstregister (120) über die erste Netzwerkverbindungsschnittstelle (160);
**dadurch gekennzeichnet, dass**
ein erster direkter Kommunikationskanal (145) zwischen dem ersten Anwendungsadapter (130) und der ersten Client-Vorrichtung (141) durch die erste Client-Vorrichtung (141) aufgebaut wird, **dass** Kommunikation zwischen der ersten Client-Vorrichtung (141) und dem ersten Anwendungsadapter (130) durch den ersten direkten Kommunikationskanal (145) geführt wird, **dass** ein zweiter direkter Kommunikationskanal (147) zwischen der ersten Client-Vorrichtung (141) und dem dritten Anwendungsadapter (230) durch die erste Client-Vorrichtung (141) aufgebaut wird, **dass** der zweite direkte Kommunikationskanal (147) nicht durch den zweiten zentralen Eintrittspunkt (210) geführt wird, und **dass** die Kommunikation zwischen der ersten Client-Vorrichtung (141) und dem dritten Anwendungsadapter (230) durch den zweiten direkten Kommunikationskanal (147) geführt wird,
und **dass** der erste direkte Kommunikationskanal (145) nicht durch die Client-Schnittstelle (140), die dritte Verbindung (103) und den ersten zentralen Eintrittspunkt (110) geführt wird.

2. Verfahren nach Anspruch 1, wobei der zweite direkte Kommunikationskanal (147) nicht durch die Netzwerkverbindung (190) geführt wird.

3. Verfahren nach Anspruch 1 oder 2, wobei nur die Inhalte des ersten Dienstregisters (120) über die erste Vorrichtungsschnittstelle (140) an die erste Client-Vorrichtung (141) verteilt werden.

4. Verfahren nach einem der Ansprüche 1 bis 3, wobei der erste Netzwerkcluster (100) ferner einen zweiten Anwendungsadapter (133) für eine zweite Anwendungssoftware (134) umfasst, umfassend die folgenden Schritte:
- Erkennung einer zweiten Verfügbarkeit der zweiten Anwendungssoftware (134) über den zweiten Anwendungsadapter (133);
- Speicherung der zweiten Verfügbarkeit der zweiten Anwendungssoftware (134) innerhalb des ersten Dienstregisters (120);
- Erkennung eines zweiten Herzschlagsignals des zweiten Anwendungsadapters (133);
- Aktualisieren der zweiten Verfügbarkeit der zweiten Anwendungssoftware (134) innerhalb des ersten Dienstregisters (120), wenn für eine zweite vordefinierte Zeitspanne kein zweites Herzschlagsignal erkannt wurde.

5. Verfahren nach einem der Ansprüche 1 bis 4, umfassend die zusätzlichen Schritte:
- Erkennung einer ersten Client-Verfügbarkeit der ersten Client-Vorrichtung (141) über die erste Client-Schnittstelle;
- Speicherung der ersten Client-Verfügbarkeit innerhalb des ersten Dienstregisters (120);
- Erkennung eines ersten Client-Herzschlagsignals der ersten Client-Vorrichtung (141);
- Aktualisieren der ersten Client-Verfügbarkeit innerhalb des ersten Dienstregisters (120), wenn für eine dritte vordefinierte Zeitspanne kein erstes Client-Herzschlagsignal erkannt wurde.

6. Verfahren nach einem der Ansprüche 1 bis 5, wobei der erste direkte Kommunikationskanal (145) eine erste Peer-to-Peer-Verbindung ist, die zwischen der ersten Client-Vorrichtung (141) und dem ersten Anwendungsadapter (130) aufgebaut wird, und wobei Anwendungsdaten von der ersten Anwendungssoftware (131) zwischen dem ersten Anwendungsadapter (130) und der ersten Client-Vorrichtung (141) über die erste Peer-to-Peer-Verbindung ausgetauscht werden.

7. Verfahren nach einem der Ansprüche 1 bis 6, wobei die erste Anwendungssoftware (131) einen Treiber für ein Überwachungskamerasystem umfasst, und wobei Kamerabilder von dem Überwachungskamerasystem über den ersten direkten Kommunikationskanal (145) an die erste Client-Vorrichtung (141) gesendet und auf einer ersten Anzeige der ersten Client-Vorrichtung (141) angezeigt werden.

8. Verfahren nach einem der Ansprüche 1 bis 7, wobei die erste Anwendungssoftware (131) einen Treiber für einen 3D-Drucker umfasst, und wobei Zustandsinformationen des 3D-Druckers über den ersten direkten Kommunikationskanal (145) an die erste Client-Vorrichtung (141) gesendet werden.

9. Verfahren nach einem der Ansprüche 1 bis 8, wobei erste Steuerbefehle von der ersten Client-Vorrichtung (141) über den ersten direkten Kommunikationskanal (145) an den ersten Anwendungsadapter (130) gesendet werden.

10. Verfahren nach einem der Ansprüche 1 bis 9, wobei der erste Netzwerkcluster (100) ferner ein erstes Arbeitslastüberwachungssystem (150) umfasst, wobei das erste Arbeitslastüberwachungssystem (150) Lese- und Schreibzugriff auf das erste Dienstregister (120) hat, wobei das erste Arbeitslastüberwachungssystem (150) eine Arbeitslast der ersten Anwendungssoftware (131) überwacht und wobei das erste Arbeitslastüberwachungssystem (150) die erste Verfügbarkeit innerhalb des ersten Dienstregisters (120) aktualisiert, wenn die Arbeitslast der ersten Anwendungssoftware (131) über einem ersten vordefinierten Wert liegt, und die erste Verfügbarkeit innerhalb des ersten Dienstregisters (120) aktualisiert, wenn die Arbeitslast der ersten Anwendungssoftware (131) wieder unter dem ersten vordefinierten Wert liegt.

11. Verfahren nach einem der Ansprüche 1 bis 10, wobei der erste Netzwerkcluster (100) ferner ein erstes Netzwerküberwachungssystem (170) umfasst, wobei das erste Netzwerküberwachungssystem (170) Lese- und Schreibzugriff auf das erste Dienstregister (120) hat, wobei das erste Netzwerküberwachungssystem (170) eine Qualität einer Netzwerkverbindung zwischen dem ersten Netzwerkcluster (100) und dem zweiten Netzwerkcluster (200) überwacht, und wobei das erste Netzwerküberwachungssystem (170) Verfügbarkeiten von Anwendungssoftwareschnittstellen des zweiten Netzwerkclusters (200) innerhalb des ersten Dienstregisters (120) aktualisiert, wenn die Qualität der Netzwerkverbindung zwischen dem ersten Netzwerkcluster (100) und dem zweiten Netzwerkcluster (200) unter eine zweiten vordefinierten Wert sinkt, und Verfügbarkeiten von Anwendungssoftwareschnittstellen des zweiten Netzwerkclusters (200) innerhalb des ersten Dienstregisters (120) aktualisiert, wenn die Qualität der Netzwerkverbindung zwischen dem ersten Netzwerkcluster (100) und dem zweiten Netzwerkcluster (200) wieder über dem zweiten vordefinierten Wert liegt.

12. Verfahren nach einem der Ansprüche 1 bis 11, wobei der erste Netzwerkcluster (100) oder der zweite Netzwerkcluster (200) eine zweite Vorrichtungsschnittstelle (143) und/oder eine dritte Vorrichtungsschnittstelle (240) für eine zweite Client-Vorrichtung (144) und/oder eine dritte Client-Vorrichtung (241) umfasst, umfassend die folgenden zusätzlichen Schritte:
- Erkennung einer zweiten Client-Verfügbarkeit der zweiten Client-Vorrichtung (144) oder der dritten Client-Vorrichtung (241) über die zweite Client-Schnittstelle (143) oder die dritte Vorrichtungsschnittstelle (240);
- Speicherung der zweiten Client-Verfügbarkeit innerhalb des ersten Dienstregisters (120) oder des zweiten Dienstregisters (220);
- Erkennung eines zweiten Client-Herzschlagsignals der zweiten Client-Vorrichtung (144) oder der dritten Client-Vorrichtung (241);
- Aktualisieren der zweiten Client-Verfügbarkeit innerhalb des ersten oder zweiten Dienstregisters (120, 220), wenn für eine fünfte vordefinierte Zeitspanne kein zweites Client-Herzschlagsignal erkannt wurde;
- Aufbauen eines dritten direkten Kommunikationskanals (148) zwischen der ersten Client-Vorrichtung (141) und der zweiten oder dritten Client-Vorrichtung (144, 241), insbesondere einer dritten Peer-to-Peer-Verbindung.

13. Verfahren nach Anspruch 12, wobei ein Telekommunikationskanal und/oder ein Videokanal über den dritten direkten Kommunikationskanal (148) aufgebaut wird.

14. System aus einem ersten Netzwerkcluster (100), einem zweiten Netzwerkcluster (200) und einer ersten Client-Vorrichtung (141), wobei der erste Netzwerkcluster (100) einen ersten zentralen Eintrittspunkt (110), ein erstes Dienstregister (120) und einen ersten Anwendungsadapter (130) für eine erste Anwendungssoftware (131) umfasst, wobei der erste zentrale Eintrittspunkt (110) eingerichtet ist, um über eine erste Vorrichtungsschnittstelle (140) eine Verbindung zu dem ersten Dienstregister (120), dem ersten Anwendungsadapter (130) und einer ersten Client-Vorrichtung (141) aufzubauen, wobei das erste Dienstregister (120) durch eine erste Verbindung (101) mit dem ersten zentralen Eintrittspunkt (110) verbunden werden kann, wobei der erste Anwendungsadapter (130) durch eine zweite Verbindung (102) mit dem ersten zentralen Eintrittspunkt (110) verbunden werden kann, wobei die erste Vorrichtungsschnittstelle (140) durch eine dritte Verbindung (103) mit dem ersten zentralen Eintrittspunkt (110) verbunden werden kann, wobei der erste zentrale Eintrittspunkt (110) eingerichtet ist, um eine erste Verfügbarkeit der ersten Anwendungssoftware (131) zu erkennen, und eingerichtet ist, um die erste Verfügbarkeit der ersten Anwendungssoftware (131) innerhalb des ersten Dienstregisters (120) zu speichern, wodurch Inhalte des ersten Dienstregisters (120) gebildet werden, wobei der erste zentrale Eintrittspunkt (110) eingerichtet ist, um ein erstes Herzschlagsignal des ersten Anwendungsadapters (130) zu erkennen, eingerichtet ist, um die erste Verfügbarkeit der ersten Anwendungssoftware (131) innerhalb des ersten Dienstregisters (120) zu aktualisieren, wenn für eine erste vordefinierte Zeitspanne kein erstes Herzschlagsignal erkannt wurde, und eingerichtet ist, um Inhalte des ersten Dienstregisters (120) über die erste Vorrichtungsschnittstelle (140) an die erste Client-Vorrichtung (141) zu verteilen, wobei der erste Netzwerkcluster (100) ferner eine erste Netzwerkverbindungsschnittstelle (160) umfasst, wobei die erste Netzwerkverbindungsschnittstelle (160) eingerichtet ist, um den ersten Netzwerkcluster (100) mit dem zweiten Netzwerkcluster (200) über eine Netzwerkverbindung (190) zu verbinden und der erste Netzwerkcluster (100) eingerichtet ist, um Inhalte eines zweiten Dienstregisters (220) über die erste Netzwerkverbindungsschnittstelle (160) zu empfangen, wobei der zweite Netzwerkcluster (200) einen zweiten zentralen Eintrittspunkt (210), das zweite Dienstregister (220) und einen dritten Anwendungsadapter (230) für eine dritte Anwendungssoftware (231) umfasst,
wobei der zweite zentrale Eintrittspunkt (210) eingerichtet ist, um eine Verbindung zu dem zweiten Dienstregister (220) und dem dritten Anwendungsadapter (230) aufzubauen, eingerichtet ist, um eine dritte Verfügbarkeit der dritten Anwendungssoftware (231) zu erkennen, und eingerichtet ist, um die dritte Verfügbarkeit der dritten Anwendungssoftware (231) innerhalb des zweiten Dienstregisters (220) zu speichern, wodurch Inhalte des zweiten Dienstregisters (220) gebildet werden, wobei der zweite zentrale Eintrittspunkt (210) eingerichtet ist, um ein drittes Herzschlagsignal des dritten Applikationsadapters (230) zu erkennen, eingerichtet ist, um die dritte Verfügbarkeit der dritten Anwendungssoftware (231) innerhalb des zweiten Dienstregisters (220) zu aktualisieren, wenn für eine dritte vordefinierte Zeitspanne kein erstes Herzschlagsignal erkannt wurde, und eingerichtet ist, um Inhalte des zweiten Dienstregisters (220) über die Netzwerkverbindungsschnittstelle (160) an den ersten Netzwerkcluster (100) zu verteilen, wobei die erste Client-Vorrichtung (141) eingerichtet ist, um sich mit einem ersten zentralen Eintrittspunkt (110) eines ersten Netzwerkclusters (100) zu verbinden, wobei die erste Client-Vorrichtung (141) eingerichtet ist, um ein erstes Client-Herzschlagsignal auszusenden, eingerichtet ist, um Inhalte eines ersten Dienstregisters (120) innerhalb des ersten Netzwerkclusters (100) und/oder eines zweiten Dienstregisters innerhalb eines zweiten Netzwerkclusters (200), der über eine erste Netzwerkverbindungsschnittstelle (160) mit dem ersten Netzwerkcluster (100) verbunden ist, zu empfangen, und wobei die erste Client-Vorrichtung (141) eingerichtet ist, um einen direkten Kommunikationskanal (145, 146, 147, 148, 149) zu dem ersten Anwendungsadapter (130) und dem dritten Anwendungsadapter (230) aufzubauen,
**dadurch gekennzeichnet, dass**
ein erster direkter Kommunikationskanal (145) zwischen dem ersten Anwendungsadapter (130) und der ersten Client-Vorrichtung (141) durch die erste Client-Vorrichtung (141) aufgebaut wird, **dass** der erste direkte Kommunikationskanal (145) nicht durch den ersten zentralen Eintrittspunkt (110) geführt wird, **dass** die Kommunikation zwischen der ersten Client-Vorrichtung (141) und dem ersten Anwendungsadapter (130) durch den ersten direkten Kommunikationskanal (145) geführt wird,
**dass** ein zweiter direkter Kommunikationskanal (147) zwischen der ersten Client-Vorrichtung (141) und dem dritten Anwendungsadapter (230) durch die erste Client-Vorrichtung (141) aufgebaut wird, **dass** der zweite direkte Kommunikationskanal (147) nicht durch den zweiten zentralen Eintrittspunkt (210) geführt wird, und **dass** die Kommunikation zwischen der ersten Client-Vorrichtung (141) und dem dritten Applikationsadapter (230) durch den zweiten direkten Kommunikationskanal (147) geführt wird,
und **dass** der erste direkte Kommunikationskanal (145) nicht durch die Client-Schnittstelle (140), die dritte Verbindung (103) und den ersten zentralen Eintrittspunkt (110) geführt wird.

15. System nach Anspruch 14, wobei der erste Eintrittspunkt (110) eingerichtet ist, um den Inhalt des ersten Dienstregisters (120) nur über die erste Vorrichtungsschnittstelle (140) an die erste Client-Vorrichtung (141) zu verteilen.

## Revendications

1. Procédé de communication au sein d'une première grappe de réseau (100), dans lequel la première grappe de réseau (100) comprend un premier point d'entrée central (110), un premier registre de service (120), un premier adaptateur d'application (130) pour un premier logiciel d'application (131) et une première interface de dispositif (140) pour un premier dispositif client (141), dans lequel le premier registre de service (120) est connecté au premier point d'entrée central (110) par une première connexion (101), dans lequel le premier adaptateur d'application (130) est connecté au premier point d'entrée central (110) par une deuxième connexion (102), dans lequel la première interface de dispositif (140) est connectée au premier point d'entrée central (110) par une troisième connexion (103) et dans lequel la première interface de dispositif (140) connecte un premier dispositif client (141) à la première grappe de réseau (100), comprenant les étapes suivantes au niveau du premier point d'entrée central (110) :
- détection d'une première disponibilité du premier logiciel d'application (131) via le premier adaptateur d'application (130) ;
- stockage d'informations concernant la première disponibilité du premier logiciel d'application (131) au sein du premier registre de service (120), ce qui forme des contenus du premier registre de service (120) ;
- détection pour savoir si un premier signal de pulsation du premier adaptateur d'application (130) est reçu ;
- mise à jour de la première disponibilité du premier logiciel d'application (131) au sein du premier registre de service (120) si aucun premier signal de pulsation n'a été détecté pendant un premier intervalle de temps prédéfini ;
- distribution de contenus du premier registre de service (120) au premier dispositif client (141) via la première interface de dispositif (140) ;
dans lequel la première grappe de réseau (100) comprend en outre une première interface de connexion réseau (160), dans lequel la première interface de connexion réseau (160) est équipée pour connecter la première grappe de réseau (100) à une deuxième grappe de réseau (200) via une connexion réseau (190), dans lequel la deuxième grappe de réseau (200) comprend un deuxième point d'entrée central (210), un deuxième registre de service (220), un troisième adaptateur d'application (230) pour un troisième logiciel d'application (230), dans lequel le deuxième registre de service (220) est alimenté avec une troisième disponibilité du troisième logiciel d'application (231) par les étapes suivantes au niveau du deuxième point d'entrée central (210) :
- détection de la troisième disponibilité du troisième logiciel d'application (231) via le troisième adaptateur d'application (230) ;
- stockage d'informations concernant la troisième disponibilité du troisième logiciel d'application (231) au sein du deuxième registre de service (220), ce qui forme des contenus du deuxième registre de service (220) ;
- détection pour savoir si un troisième signal de pulsation du troisième logiciel d'application (231) est reçu ;
- mise à jour de la troisième disponibilité du troisième logiciel d'application (231) au sein du deuxième registre de service (220) si aucun troisième signal de pulsation n'a été détecté pendant un quatrième intervalle de temps prédéfini ;
- distribution de contenus du deuxième registre de service (220) au premier registre de service (120) via la première interface de connexion réseau (160) ;
**caractérisé en ce que**
un premier canal de communication direct (145) est établi entre le premier adaptateur d'application (130) et le premier dispositif client (141) par le premier dispositif client (141), **en ce qu'**une communication entre le premier dispositif client (141) et le premier adaptateur d'application (130) est guidée par l'intermédiaire du premier canal de communication direct (145),
**en ce qu'**un deuxième canal de communication direct (147) est établi entre le premier dispositif client (141) et le troisième adaptateur d'application (230) par le premier dispositif client (141), **en ce que** le deuxième canal de communication direct (147) n'est pas guidé par l'intermédiaire du deuxième point d'entrée central (210), et **en ce qu'**une communication entre le premier dispositif client (141) et le troisième adaptateur d'application (230) est guidée par l'intermédiaire du deuxième canal de communication direct (147),
et **en ce que** le premier canal de communication direct (145) n'est pas guidé par l'intermédiaire de l'interface client (140), de la troisième connexion (103) et du premier point d'entrée central (110).

2. Procédé selon la revendication 1, dans lequel le deuxième canal de communication direct (147) n'est pas guidé par l'intermédiaire de la connexion réseau (190).

3. Procédé selon les revendications 1 ou 2, dans lequel seuls les contenus du premier registre de service (120) sont distribués au premier dispositif client (141) via la première interface de dispositif (140).

4. Procédé selon l'une quelconque des revendications 1 à 3, dans lequel la première grappe de réseau (100) comprend en outre un deuxième adaptateur d'application (133) pour un deuxième logiciel d'application (134), comprenant les étapes suivantes :
- détection d'une deuxième disponibilité du deuxième logiciel d'application (134) via le deuxième adaptateur d'application (133) ;
- stockage de la deuxième disponibilité du deuxième logiciel d'application (134) au sein du premier registre de service (120) ;
- détection d'un deuxième signal de pulsation du deuxième adaptateur d'application (133) ;
- mise à jour de la deuxième disponibilité du deuxième logiciel d'application (134) au sein du premier registre de service (120) si aucun deuxième signal de pulsation n'a été détecté pendant un deuxième intervalle de temps prédéfini.

5. Procédé selon l'une quelconque des revendications 1 à 4, comprenant les étapes supplémentaires :
- détection d'une première disponibilité client du premier dispositif client (141) via la première interface client ;
- stockage de la première disponibilité client au sein du premier registre de service (120) ;
- détection d'un premier signal de pulsation client du premier dispositif client (141) ;
- mise à jour de la première disponibilité client au sein du premier registre de service (120) si aucun premier signal de pulsation client n'a été détecté pendant un troisième intervalle de temps prédéfini.

6. Procédé selon l'une quelconque des revendications 1 à 5, dans lequel le premier canal de communication direct (145) est une première connexion pair-à-pair établie entre le premier dispositif client (141) et le premier adaptateur d'application (130) et dans lequel des données d'application provenant du premier logiciel d'application (131) sont échangées entre le premier adaptateur d'application (130) et le premier dispositif client (141) via la première connexion pair-à-pair.

7. Procédé selon l'une quelconque des revendications 1 à 6, dans lequel le premier logiciel d'application (131) comprend un pilote pour un système de caméra de surveillance, et dans lequel des images de caméra provenant du système de caméra de surveillance sont envoyées au premier dispositif client (141) via le premier canal de communication direct (145) et affichées au niveau d'un premier affichage du premier dispositif client (141).

8. Procédé selon l'une quelconque des revendications 1 à 7, dans lequel le premier logiciel d'application (131) comprend un pilote pour une imprimante 3D, et dans lequel des informations d'état de l'imprimante 3D sont envoyées au premier dispositif client (141) via le premier canal de communication direct (145).

9. Procédé selon l'une quelconque des revendications 1 à 8, dans lequel des premières instructions de commande sont envoyées depuis le premier dispositif client (141) vers le premier adaptateur d'application (130) via le premier canal de communication direct (145).

10. Procédé selon l'une quelconque des revendications 1 à 9, dans lequel la première grappe de réseau (100) comprend en outre un premier système de surveillance de charge de travail (150), dans lequel le premier système de surveillance de charge de travail (150) a un accès en lecture et en écriture au premier registre de service (120), dans lequel le premier système de surveillance de charge de travail (150) surveille une charge de travail du premier logiciel d'application (131) et dans lequel le premier système de surveillance de charge de travail (150) met à jour la première disponibilité au sein du premier registre de service (120) si la charge de travail du premier logiciel d'application (131) est supérieure à une première valeur prédéfinie et met à jour la première disponibilité au sein du premier registre de service (120) si la charge de travail du premier logiciel d'application (131) est de nouveau inférieure à la première valeur prédéfinie.

11. Procédé selon l'une quelconque des revendications 1 à 10, dans lequel la première grappe de réseau (100) comprend en outre un premier système de surveillance réseau (170), dans lequel le premier système de surveillance réseau (170) a un accès en lecture et en écriture au premier registre de service (120), dans lequel le premier système de surveillance réseau (170) surveille une qualité d'une connexion réseau entre la première grappe de réseau (100) et la deuxième grappe de réseau (200), et dans lequel le premier système de surveillance réseau (170) met à jour les disponibilités d'interfaces de logiciel d'application de la deuxième grappe de réseau (200) au sein du premier registre de service (120) si la qualité de la connexion réseau entre la première grappe de réseau (100) et la deuxième grappe de réseau (200) descend en dessous d'une deuxième valeur prédéfinie et met à jour les disponibilités d'interfaces de logiciel d'application de la deuxième grappe de réseau (200) au sein du premier registre de service (120) si la qualité de la connexion réseau entre la première grappe de réseau (100) et la deuxième grappe de réseau (200) est de nouveau au-dessus de la deuxième valeur prédéfinie.

12. Procédé selon l'une quelconque des revendications 1 à 11, dans lequel la première grappe de réseau (100) ou la deuxième grappe de réseau (200) comprend une deuxième interface de dispositif (143) et/ou une troisième interface de dispositif (240) pour un deuxième dispositif client (144) et/ou un troisième dispositif client (241), comprenant les étapes supplémentaires suivantes :
- détection d'une deuxième disponibilité client du deuxième dispositif client (144) ou du troisième dispositif client (241) via la deuxième interface client (143) ou la troisième interface de dispositif (240) ;
- stockage de la deuxième disponibilité client au sein du premier registre de service (120) ou du deuxième registre de service (220) ;
- détection d'un deuxième signal de pulsation client du deuxième dispositif client (144) ou du troisième dispositif client (241) ;
- mise à jour de la deuxième disponibilité client au sein du premier ou du deuxième registre de service (120, 220) si aucun deuxième signal de pulsation client n'a été détecté pendant un cinquième intervalle de temps prédéfini ;
- établissement d'un troisième canal de communication direct (148) entre le premier dispositif client (141) et le deuxième ou troisième dispositif client (144, 241), en particulier d'une troisième connexion pair-à-pair.

13. Procédé selon la revendication 12, dans lequel un canal de télécommunication et/ou un canal vidéo sont établis via le troisième canal de communication direct (148).

14. Système d'une première grappe de réseau (100), d'une deuxième grappe de réseau (200) et d'un premier dispositif client (141), dans lequel la première grappe de réseau (100) comprend un premier point d'entrée central (110), un premier registre de service (120) et un premier adaptateur d'application (130) pour un premier logiciel d'application (131), dans lequel le premier point d'entrée central (110) est équipé pour établir une connexion au premier registre de service (120), au premier adaptateur d'application (130) et à un premier dispositif client (141) via une première interface de dispositif (140), dans lequel le premier registre de service (120) peut être connecté au premier point d'entrée central (110) par une première connexion (101), dans lequel le premier adaptateur d'application (130) peut être connecté au premier point d'entrée central (110) par une deuxième connexion (102), dans lequel la première interface de dispositif (140) peut être connectée au premier point d'entrée central (110) par une troisième connexion (103), dans lequel le premier point d'entrée central (110) est équipé pour détecter une première disponibilité du premier logiciel d'application (131) et est équipé pour stocker la première disponibilité du premier logiciel d'application (131) au sein du premier registre de service (120), ce qui forme des contenus du premier registre de service (120), dans lequel le premier point d'entrée central (110) est équipé pour détecter un premier signal de pulsation du premier adaptateur d'application (130), est équipé pour mettre à jour la première disponibilité du premier logiciel d'application (131) au sein du premier registre de service (120) si aucun premier signal de pulsation n'a été détecté pendant un premier intervalle de temps prédéfini et est équipé pour distribuer des contenus du premier registre de service (120) au premier dispositif client (141) via la première interface de dispositif (140), dans lequel la première grappe de réseau (100) comprend en outre une première interface de connexion réseau (160), dans lequel la première interface de connexion réseau (160) est équipée pour connecter la première grappe de réseau (100) à la deuxième grappe de réseau (200) via une connexion réseau (190) et la première grappe de réseau (100) est équipée pour recevoir des contenus d'un deuxième registre de service (220) via la première interface de connexion réseau (160), dans lequel la deuxième grappe de réseau (200) comprend un deuxième point d'entrée central (210), le deuxième registre de service (220) et un troisième adaptateur d'application (230) pour un troisième logiciel d'application (231), dans lequel le deuxième point d'entrée central (210) est équipé pour établir une connexion au deuxième registre de service (220) et le troisième adaptateur d'application (230) est équipé pour détecter une troisième disponibilité du troisième logiciel d'application (231) et est équipé pour stocker la troisième disponibilité du troisième logiciel d'application (231) au sein du deuxième registre de service (220), ce qui forme des contenus du deuxième registre de service (220), dans lequel le deuxième point d'entrée central (210) est équipé pour détecter un troisième signal de pulsation du troisième adaptateur d'application (230), est équipé pour mettre à jour la troisième disponibilité du troisième logiciel d'application (231) au sein du deuxième registre de service (220) si aucun premier signal de pulsation n'a été détecté pendant un troisième intervalle de temps prédéfini et est équipé pour distribuer des contenus du deuxième registre de service (220) à la première grappe de réseau (100) via l'interface de connexion réseau (160), dans lequel le premier dispositif client (141) est équipé pour se connecter à un premier point d'entrée central (110) d'une première grappe de réseau (100), dans lequel le premier dispositif client (141) est équipé pour envoyer un premier signal de pulsation client, est équipé pour recevoir des contenus d'un premier registre de service (120) au sein de la première grappe de réseau (100) et/ou d'un deuxième registre de service au sein d'une deuxième grappe de réseau (200) connectée à la première grappe de réseau (100) via une première interface de connexion réseau (160), et dans lequel le premier dispositif client (141) est équipé pour établir un canal de communication direct (145, 146, 147, 148, 149) vers le premier adaptateur d'application (130) et le troisième adaptateur d'application (230), **caractérisé en ce que**
un premier canal de communication direct (145) est établi entre le premier adaptateur d'application (130) et le premier dispositif client (141) par le premier dispositif client (141), **en ce que** le premier canal de communication direct (145) n'est pas guidé par l'intermédiaire du premier point d'entrée central (110), **en ce qu'**une communication entre le premier dispositif client (141) et le premier adaptateur d'application (130) est guidée par l'intermédiaire du premier canal de communication direct (145),
**en ce qu'**un deuxième canal de communication direct (147) est établi entre le premier dispositif client (141) et le troisième adaptateur d'application (230) par le premier dispositif client (141), **en ce que** le deuxième canal de communication direct (147) n'est pas guidé par l'intermédiaire du deuxième point d'entrée central (210), et **en ce qu'**une communication entre le premier dispositif client (141) et le troisième adaptateur d'application (230) est guidée par l'intermédiaire du deuxième canal de communication direct (147),
et **en ce que** le premier canal de communication direct (145) n'est pas guidé par l'intermédiaire de l'interface client (140), de la troisième connexion (103) et du premier point d'entrée central (110).

15. Système selon la revendication 14, dans lequel le premier point d'entrée (110) est équipé pour distribuer uniquement les contenus du premier registre de service (120) au premier dispositif client (141) via la première interface de dispositif (140).
